# EUROPEAN PATENT APPLICATION

(11) **EP 2 862 444 A1**
(43) Date of publication of application: **22.04.2015**
(21) Application number: 13189063.4
(22) Date of filing: 17.10.2013
(51) Int. Cl.: A21B 1/26, F24C 15/32

(54) **Convection oven**

(71) Applicant: Inoxtrend S.r.l., 31025 Santa Lucia di Piave (TV) (IT)
(72) Inventor: Barazza, Aldo, 31025 SANTA LUCIA DI PIAVE (Treviso) (IT)
(74) Representative: Lissandrini, Marco

(57) **Abstract**

A convection oven (1) comprises a containing structure (2), a baking chamber (6) inside the containing structure (2) and heating means (16) operatively associated with the baking chamber (6) to generate a hot air flow inside the baking chamber (6).

According to this invention, the oven (1) comprises two hot air flow deflector devices (30), mounted at least partly inside the baking chamber (6) and positioned to be struck by the hot air flow in order to divert it. The deflector devices (30) are cyclically movable, during operation of the oven (1) in order to divert the hot air flow towards a plurality of different zones of the baking chamber (6). The deflector devices (30) are driven by a single motor (42) and are mounted in a fixed positional relationship relative to each other.

## Description

This invention relates to a convection oven. More specifically, the invention is used preferably for baking food products. Still more specifically, the invention is used for baking foods in the bread and pastry making industries. It should be noted that to create optimal baking conditions, especially for making bread and pastries, it is very important for the heat in the baking chamber of the oven to be uniformly distributed.

At present, according to the prior art, various different types of convection ovens are used in the bread and/or pastry making industry.

A first type of convection oven (known as "rotary carriage bakery oven") comprises a containing structure whose interior defines a baking chamber into which the foods to baked are placed. This type of oven also comprises heating means usually consisting of a fan and a plurality of heated pipes (heated electrically or by combustion fumes flowing through them) coiled around the fan.

The heating means generate a flow of hot air which is diffused in the baking chamber through one or more outlet ports. This flow of hot air raises the temperature inside the baking chamber in such a way as to bake the food placed therein.

More in detail, the first prior art type of oven comprises a carriage which is mounted in the centre of the baking chamber and on which the foods to be baked are placed. During use, the carriage rotates on itself in such a way that the hot air bakes all the foods in the same way. Indeed, thanks to the rotating carriage, each item of food is moved cyclically towards and away from the hot air outlet ports in such a way that all the food items in their entirety are baked uniformly.

Ovens of this first type have some disadvantages, however.

First of all, the use of the rotary carriage complicates the mechanical structure of the oven, which translates as higher costs of production. In effect, rotation of the carriage requires suitable power-driven, rotatable supporting structures.

Secondly, this type of oven normally occupies a great deal of space because the carriage rotating inside the baking chamber means that the baking chamber must be larger than the carriage so that the latter can turn completely about itself. This is even more of a problem in the case of industrial ovens where the carriages (and hence the baking chambers) must be very large.

In a second prior art technique, on the other hand, the direction of rotation of the fan is cyclically reversed so as to diffuse the heat in the baking chamber as uniformly as possible. For example, using a radial suction, radial blower fan, the direction of rotation (clockwise and anticlockwise) is cyclically reversed in such a way that the air flow is stronger towards the right (looking at the fan from the front) for a first interval of time and towards the left for a second interval of time following the first.

That way, the flow of hot air is diffused in different directions within the baking chamber, depending on the direction of rotation of the fan.

This second prior art technique also has disadvantages, however.

Firstly, a sufficiently advanced system must be provided to control the heating means so that the direction of rotation of the fans can be reversed cyclically.

Also, to obtain uniform distribution of the heat, the right-hand and left-hand parts of the baking chamber (again looking at the fan from the front) must be symmetrical. If they are not, some parts of the baking chamber might be reached by the flow of hot air only when the fan turns in one direction and not in the other.

The second technique also has a further disadvantage due to the down time caused by the reversal of the direction of fan rotation, which means that the total baking time of the foods is longer.

A third prior art technique (described in patent document DE4007198) involves using rotary baffle panels mounted at suitable air outlet mouths. More in detail, the baffle panels rotate continuously through 360° so that the air entering the baking chamber is scattered in all directions.

In this third prior art technique, however, the air is not directed in a precise direction to uniformly heat the food items.

In this situation, the aim of this invention is to provide a convection oven which overcomes the above mentioned disadvantages.

More specifically, the aim of this invention is to provide a convection oven which allows heat to be distributed uniformly in the baking chamber in a structurally simple manner compared to the prior art.

Another aim of this invention is to provide a convection oven which allows heat to be distributed uniformly and effectively in the baking chamber.

A yet further aim of the invention is to provide a convection oven at a lower cost than prior art convection ovens.

The above mentioned aims are substantially achieved by a convection oven as described in the accompanying claims.

Further features and advantages of the invention are more apparent from the detailed description which follows of a preferred but non-limiting embodiment of a convection oven as illustrated in the accompanying drawings, in which:
- Figure 1 is a top view, with some parts cut away in order to better illustrate others, of a convection oven according to this invention;
- Figure 2 is an axonometric side view, with some parts cut away in order to better illustrate others, of the convection oven of Figure 1 ;
- Figure 3 shows in an axonometric view a first detail of the convection oven illustrated in Figure 2;
- Figure 4 shows in an axonometric view a second detail of the convection oven illustrated in Figure 2;
- Figure 5 is a top view showing the convection oven of Figure 1 in a non-operating configuration.

With reference to the above mentioned drawings, the reference numeral 1 denotes in its entirety a convection oven according to the invention.

More specifically, the convection oven 1 comprises a containing structure 2 having an outer casing 3 which defines the outside shape of the oven 1. The outer casing 3 comprises a supporting base, a plurality of side panels 5 and a top, opposite to the supporting base.

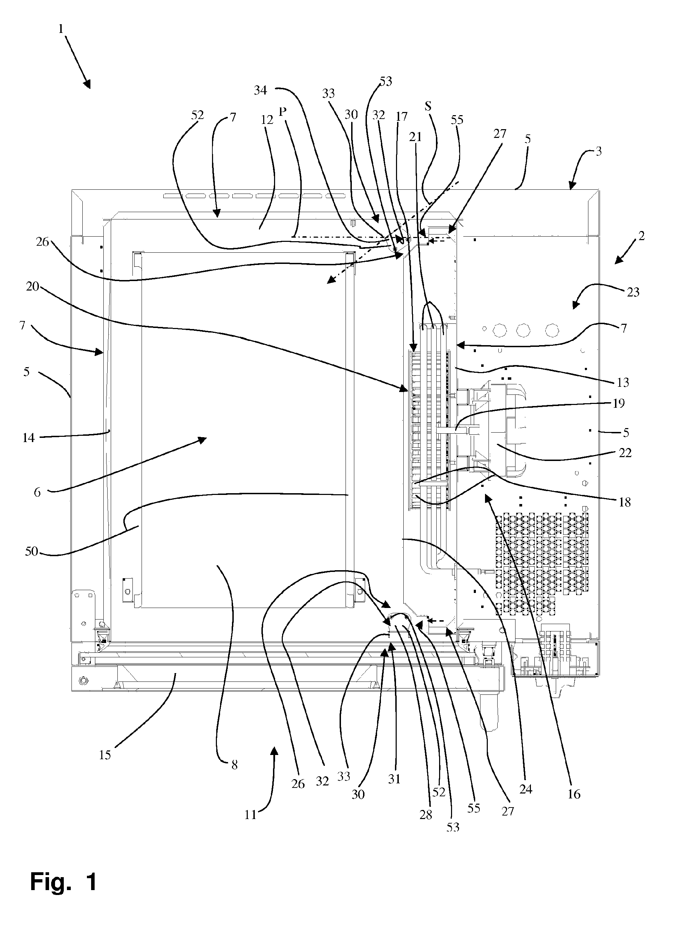

The oven 1 also has a baking chamber 6 (visible in Figure 1) made inside the containing structure 2. More precisely, the containing structure 2 comprises at least one side wall 7, a bottom wall 8 and an upper wall opposite to the bottom wall 8, which are connected to each other and together define the baking chamber 6.

In the preferred embodiment illustrated for example in Figure 1, the containing structure 2 comprises three side walls 7 extending vertically and connected one after the other.

The baking chamber 6 also has an access opening 10 at a front face 11 of the containing structure 2. Thus, looking at the baking chamber 6 from the access opening 10, it is possible to identify the three side walls 7 in an end side wall 12 (opposite to the access opening 10), a right-hand side wall 13 (on the right of the access opening 10) and a left-hand side wall 14 (on the left of the access opening 10).

The oven 1 further comprises a door 15 mounted at the access opening 10 and movable between a closed position, where it closes the access opening 10, and an open position.

It should be noted that the baking chamber 6 is laterally closed by the three side walls 7 and by the door 15.

The oven 1 also comprises heating means 16 operatively associated with the baking chamber 6 to generate a flow of hot air inside the baking chamber 6. In the preferred embodiment illustrated for example in Figure 1, the heating means 16 comprise an axial suction, radial blower fan 17. More in detail, the fan 17 comprises a plurality of vanes 18 arranged radially around a rotation shaft 19. In still more detail, the fan 17 has inside it a cylindrical suction chamber 20 between the vanes 18.

In addition, the heating means 16 comprise a plurality of heating elements 21 coiled around the fan 17. The heating elements 21 comprise electrical resistors or pipes with combustion fumes flowing through them.

The heating means 16 also comprise an electric motor 22 operatively connected to the fan 17 by way of the rotation shaft 19 (which also forms part of the heating means 16) in order to rotate the fan, and a heat supply source (electric or gas, not illustrated in the accompanying drawings) operatively connected to the heating elements 21.

During operation, the fan 17 sucks air in from the baking chamber 6, stores it temporarily in the suction chamber 20 and then blows it out radially by way of the heating elements 21.

More specifically, the heating means 16 are mounted on a side wall 7 and project in cantilever fashion towards the inside of the baking chamber 6. Still more specifically, the fan 17 and the heating elements 21 project in cantilever fashion towards the inside of the baking chamber 6, whilst the electric motor 22 and the heat supply source are mounted in a service compartment 23 adjacent to the side wall 7.

More precisely, the rotation shaft 19 runs through the side wall 7 in such a way as to connect the motor 22 to the fan 17.

The service compartment 23 is formed between the outer casing 3 of the containing structure 2 and the baking chamber 6. In other words, the service compartment 23 is separate from the baking chamber 6.

Preferably, the heating means 16 are mounted laterally of the access opening 10. In Figure 1 it may be noticed that the heating means 16 are mounted on the side wall 13 on the right-hand side of the access opening 10.

In other embodiments, not illustrated in the accompanying drawings, the heating means 16 are mounted on the left-hand side wall 14 or on the inner end side wall 12.

The oven 1 further comprises a covering panel 24 interposed between the heating means 16 and the baking chamber 6 in such a way as to cover the heating means 16. More precisely, the covering panel 24 covers the fan 17 and the heating elements 21.

More in detail, the covering panel 24 extends substantially parallel to the right-hand side wall 13, covering it almost completely.

At the centre of it, the covering panel 24 has a plurality of air flow openings 25 allowing air to flow from the baking chamber 6 to the suction chamber 20 of the fan 17 (during the suction stage). The covering panel 24 also has two air outlet mouths 26 giving onto the baking chamber 6 to allow hot air to be blown into the baking chamber 6.

Preferably, the air outlet mouths 26 extend vertically in the proximity of the lateral margins of the selfsame covering panel 24. More precisely, a first outlet mouth 26 is located in the proximity of the inner end side wall 12 and a second outlet mouth 26 is located in the proximity of the access opening 10.

The covering panel 24 might also comprise an internal baffle 27 to direct the air flow towards the outlet mouth 26. For example, Figure 1 shows that the covering panel 24 comprises two internal baffles 27, each extending from the fan 17 towards a respective outlet mouth 26. The baffles 27 are referred to as "internal" in the sense that, relative to the baking chamber 6, they are covered by the rest of the covering panel 24. In other words, the internal baffles 27 face towards the heating means 16 (and not towards the baking chamber 6). More in detail, the covering panel 24 is box-shaped, with a face mainly in the shape of a C. This face faces the heating means 16 and is provided with the internal baffles 27.

The covering panel 24 also has two grooves 55, each located at a respective outlet mouth 26. More specifically, each groove 24 extends from the bottom wall 8 to the upper wall. More specifically, the groove is located at the vertical sides of the covering panel 24 and is described in more detail below.

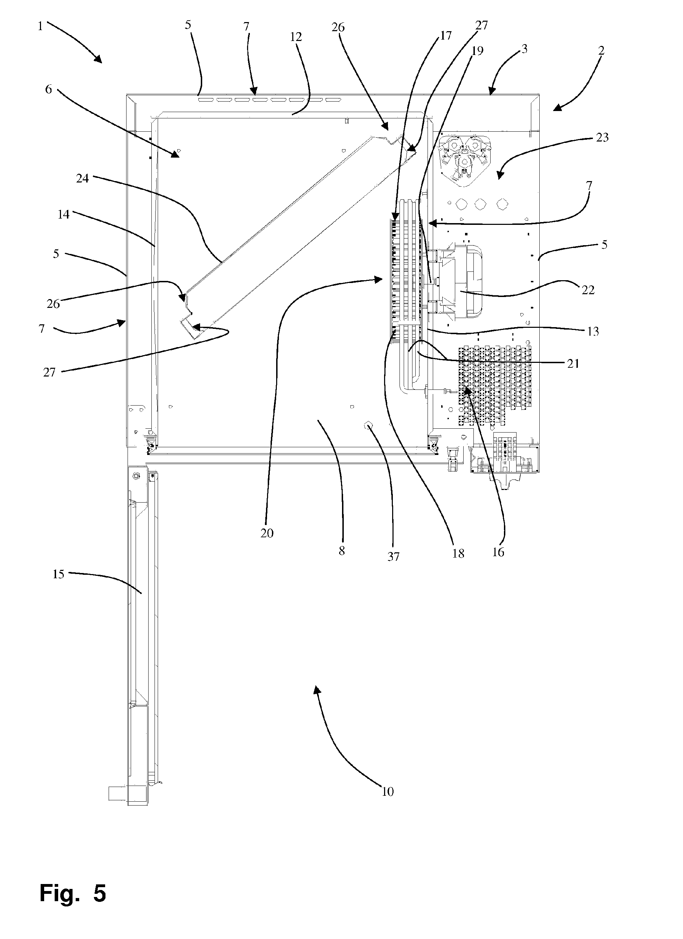

Advantageously, the covering panel 24 is at least partly rotatable relative to the side wall 7, between an operating position where it is proximate to the right-hand side wall 13 and encloses the heating means 16 (Figure 1), and a rest position where it is turned towards the inside of the baking chamber 6 and allows access to the heating means 16 (Figure 5). Preferably, the covering panel 24 is fully rotatable about a vertical axis 29 located in the proximity of the inner end side wall 12 so that when it is at the rest position, an operator can access the heating means 16 (for example, for maintenance purposes) through the access opening 10.

According to this invention, the oven 1 comprises two hot air flow deflector devices 30, mounted at least partly inside the baking chamber 6 and positioned to be struck by the hot air flow in order to divert it. Further, the hot air flow deflector devices 30 are movable, during operation of the oven 1 (that is, when the foods are being baked) in order to divert the hot air flow towards a plurality of different zones of the baking chamber 6.

More specifically, each hot air flow deflector device 30 comprises at least one baffle panel 31 mounted in the baking chamber 6 and having an air flow diverting surface 32 which, in use, strikes the air flow.

Preferably, the two baffle panels 31 are spaced from each other and positioned in the proximity of the outlet mouths 26. In other words, the baffle panels 31 are positioned laterally of the access opening 10 in the proximity of the side wall 7 on which the heating means 16 are mounted. Preferably, the two baffle panels 31 are positioned in the proximity of the right-hand side wall 13.

In addition, each baffle panel 31 is mounted in the proximity of the covering panel 24 and is spaced therefrom towards the baking chamber 6.

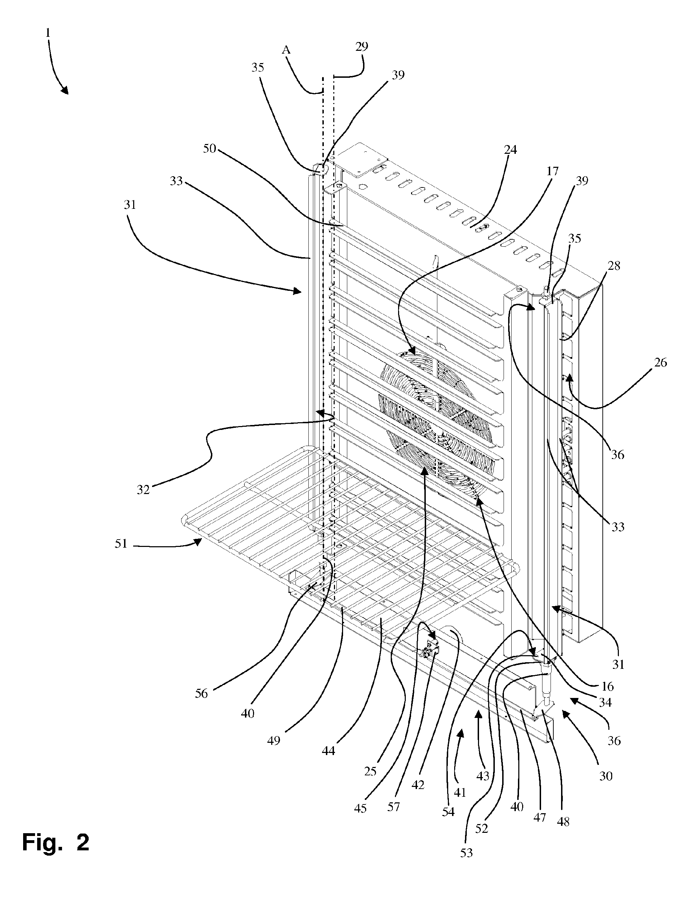

More in detail, each deflector device 30 is preferably mounted in the proximity of a respective groove 55 of the covering panel 24. In effect, each groove 55 defines a space for mounting a respective deflector device 30 in the proximity of the covering panel 24. In other words, the presence of the groove 55 allows positioning the deflector device 30 closer to the covering panel 24. It is thus possible to increase the distance between each deflector device 30 and the supporting rack 50 (or baking pan grid, described below). In other words, the deflector devices 30 are spaced from the rack 50 so that they do not physically interfere with the baking pans or grids 51 during insertion and extraction from the supporting rack 50. For example, as shown in Figure 2, the grooves 55 allow the deflector devices 30 to be spaced from the rack 50.

Alternatively to the grooves 55, the rack 50 can be spaced from the covering panel 24 in such a way that the deflector devices 30 do not interfere with the rack 50 as shown in Figure 1. Thus, in this representation (Figure 1), the covering panel 24 might not have the grooves 55 (unlike what is illustrated). It should also be noted that the covering panel 24 might have only one groove 55 located at the access opening 10 (and not have the groove 55 on the wall opposite to the access opening 10) so as to, in any case, facilitate extraction and insertion of the baking pans from and into the baking chamber 6.

In other embodiments, not illustrated in the accompanying drawings, the baffle panels 31 are located in the proximity of the inner end side wall 12 or of the left-hand side wall 14, depending on the air flow outlet points. More in detail, the baffle panels 31 are located on the inner end wall 12 if the heating means 16 are mounted on that wall or on the left-hand side wall 14 if the heating means 16 are mounted on that wall.

Further, each baffle panel 31 is rotatably mounted on the containing structure 2 so that the angle of incidence of the air flow on the diverting surface 32 can be varied during use. In other words, the air flow is propagated away from the respective side wall 7 along a direction of origin P (represented schematically in Figure 1) and after striking the baffle panel 31, is directed along a direction of propagation S (represented schematically in Figure 1) at an angle to the direction of origin. It should be noted that the direction of propagation S is tangent to (or a continuation of) the diverting surface 32.

Thus, by turning the baffle panel 31 it is possible to vary the angle of incidence between the direction of propagation S and the direction of origin P. In other words, during use, the direction of propagation S moves continuously in such a way as to cover a plurality of different zones of the baking chamber 6.

That way, the hot air (and hence the heat) is distributed uniformly within the baking chamber 6. In effect, the baffle panel 31 is movable between an initial position, defining an initial angle of incidence, and a final position, defining a final angle of incidence. In addition, the baffle panel 31 is cyclically movable between its initial position and its final position. For example, at the initial position, the diverting surface 32 of the baffle panel 31 is substantially parallel to the direction of origin P of the air flow (Figure 1, baffle panel 31 down), whereas at the final position, the diverting surface 32 of the baffle panel 31 is inclined at an angle to the direction of origin P of the air flow (Figure 1, baffle panel 31 up). More specifically, at the final position, the angle of inclination made by the diverting surface 32 of the baffle panel 31 with the direction of origin P of the air flow depends on the position of the baffle panel 31 within the baking chamber. Still more specifically, the angle of inclination made by the diverting surface 32 of the baffle panel 31 with the direction of origin P of the air flow depends on the position of the baffle panel 31 relative to the grids 51 on which the foods being baked are placed. Further, each baffle panel 31 extends mainly along a main axis of extension A from the bottom wall 8 to the upper wall of the baking chamber 6 so that the baffle panel 31 interferes with the propagation of the air flow.

In effect, as may be noticed in the preferred embodiment illustrated in the accompanying drawings, the main direction of extension A is transversal to the direction of origin P of the air flow. In other words, the main axis of extension A is vertical.

Advantageously, the baffle panel 31 extends all the way from the bottom wall 8 to the upper wall in such a way as to cover the full height of the baking chamber 6.

In addition, each baffle panel 31 comprises at least one lateral portion 33 extending mainly longitudinally along the main axis of extension A. The lateral portion 33 is bent backwards relative to the rest of the baffle panel 31 and relative to the rest of the air flow diverting surface 32. Advantageously, the lateral portion 33 defines a rib on the baffle panel 31 in order to make the baffle panel 31 stiffer.

In the preferred embodiment, each baffle panel 31 comprises two lateral portions 33 at the vertical edges of the baffle panel 31 itself. Advantageously, the lateral portions 33 confer stiffness to the baffle panel 31.

In addition to this aspect, the lateral portions 33 can be used to correct the direction of propagation S of the diverted air flow. For example, the lateral portion 33 furthest from the respective outlet mouth 26 is bent towards the centre of the baking chamber 6 in such a way as to facilitate diversion of the air flow.

Further, it should be noted that the baffle panel 31 and/or at least one lateral portion 33 may have a predetermined shape (other than that of a flat surface) in order to divert the air flow in the baking chamber. For example, the baffle panel 31 and/or at least one lateral portion 33 may have a curved or "crescent"-like shape or other shape not expressly described herein. Preferably, the lateral portions 33 form a single part with the rest of the baffle panel 31. More in detail, the baffle panel 31 is preferably made of metal and the lateral portions 33 are defined by a bend in the metal in the proximity of the edges of the baffle panel 31. In still more detail, the bend in the metal extends longitudinally along a direction parallel to the main axis of extension A.

In an alternative embodiment not illustrated in the accompanying drawings, the lateral portions 33 are not present. In that case, the diverting surface 32 of the baffle panel 31 is substantially flat.

In the preferred embodiment illustrated in the accompanying drawings, each baffle panel 31 extends along the main axis of extension A from a bottom end 34 to a top end 35.

More specifically, each deflector device 30 comprises removable connecting means 36 (Figure 2) operatively interposed between the bottom end 34 and the bottom wall 8 and between the top end 35 and the upper wall to allow the baffle panel 31 to be connected to or disconnected from the rest of the deflector device 30. In other words, the removable connecting means 36 allow removing the baffle panel 31 from the baking chamber 6.

More in detail, the removable connecting means 36 comprise at least one upper hole made on the upper wall. The removable connecting means 36 accordingly also comprise an upper pin 39 connected to the top end 35 of the baffle panel 31 and rotatably inserted in the upper hole of the baffle panel 31.

The removable connecting means 36 also comprise a bottom plate 52 rotatably attached to the bottom wall 8 and removably connected to the bottom end 34 of the baffle panel 31. Preferably, the bottom plate 52 is positioned substantially parallel to the bottom wall 8 and has a top surface which faces the upper wall and an underside surface which faces the bottom wall 8. More in detail, the removable connecting means 36 comprise a bottom pin 40 connected to the bottom plate 52 and running through the bottom wall 8 towards the supporting base (Figure 2). In other words, the bottom pin 40 is connected to the bottom plate 52 and extends transversely thereto.

The bottom pin 40 is rotatably inserted in a bottom hole 37 (also forming part of the removable connecting means 36) made on the bottom wall 8. In other words, the bottom pin 40 passes through the bottom hole 37 (Figure 2). That way, the baffle panel 31 is rotatable on itself about the main axis A thanks not only to the upper hole and the upper pin 39 inserted therein but also to the bottom hole 37 and the bottom pin 40 inserted therein.

In addition, the removable connecting means 36 comprise at least two protuberances 53 connected to the bottom plate 52 and protruding therefrom towards the upper wall. In other words, the protuberances 53 are located on the top surface of the bottom plate 52.

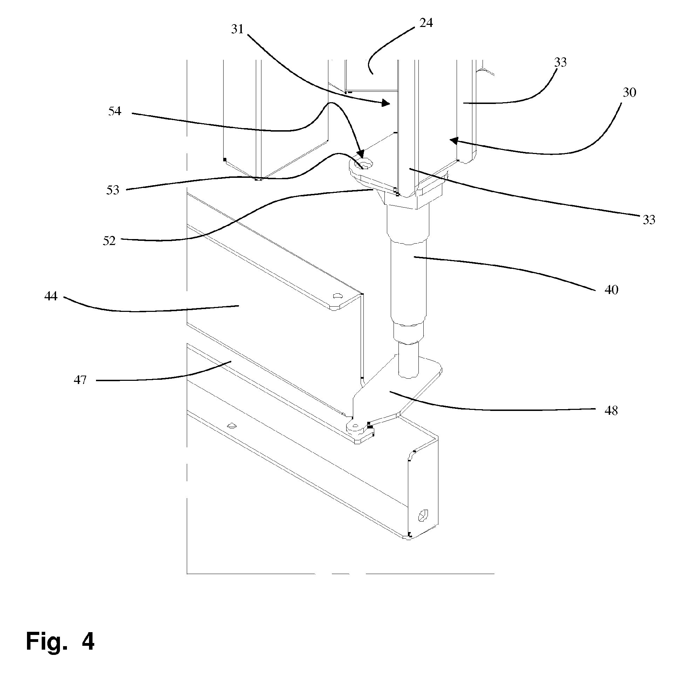

The removable connecting means 36 also comprise at least two retaining holes 54 made on the bottom end 34 of the baffle panel 31 in order to fasten the bottom of the baffle panel 31 to the bottom plate 52. In effect, when the oven 1 is in operation, each protuberance 53 is inserted in a respective retaining hole 54 in such a way as to support the baffle panel 31 (Figure 4). Preferably, the bottom end 34 of the baffle panel 31 extends substantially transversely to the main axis A and is substantially parallel to the bottom plate 52. That way, the bottom end 34 and the bottom plate 52 are juxtaposed along a horizontal plane.

Advantageously, the at least two protuberances 53 and the at least two respective retaining holes 54 allow rotary motion (generated by the movement means 41, described below) to be transmitted from the bottom pin 40 to the baffle panel 31, preventing the baffle panel 31 from rotating relative to the bottom plate 52.

Advantageously, between the upper wall and the top end 35 of each baffle panel 31, there is a gap (clearance) necessary to allow the baffle panel 31 to be removed.

In effect, by a vertical upward movement of the baffle panel 31 (made possible by the gap), the bottom end 34 of the baffle panel 31 can be disengaged from the protuberance 53 (causing the protuberances 53 to come out of the retaining holes 54) and then, by tilting the baffle panel 31 at an angle to the vertical, it is also possible to take the upper pin 39 out of the respective upper hole so that the baffle panel 31 can be taken out of the baking chamber 6 completely.

In other words, the baffle panel 31 is removable, whereas the bottom pin 40, the bottom plate 52 and the protuberances 53 remain fixed in place.

It should be noted that to bring the covering panel 24 to the rest position, the baffle panels 31 must be removed from the baking chamber 6.

More specifically, it should be noted that the minimum distance of the covering panel 24 from the bottom wall 8 is greater than the distance of the protuberances 53 of the bottom plate 52 from the bottom wall, measured along a vertical direction.

The covering panel 24 can be brought to the rest position without interfering with the protuberances 53.

According to this invention, the oven 1 comprises motion transmission means 43 connected between each deflector device 30 and a single unit 42 for generating the motion in such a way as to drive the deflector devices 30. Preferably, the unit 42 for generating the motion comprises a single electric motor. Advantageously, the deflector devices 30 are driven by a single motor connected to them by way of the transmission means 43.

More specifically, the motion transmission means 43 define a fixed positional relationship between the two deflector devices 30 so that the latter move without changing their positions relative to each other. In other words, the transmission means 43 define a positional constraint between the two deflector devices 30, so that the latter are positioned according to a predetermined positional relationship and move together.

More specifically, the deflector devices 30 are oriented according to respective directions of air flow propagation directed towards different zones of the baking chamber at least during the same instant in time as the deflector devices 30 move. In other words, the deflector devices 30 are oriented in such a way as to direct the air flow to different zones of the baking chamber. That means that during each instant in time in which the deflector devices 30 move, a first deflector device 30 is oriented along a direction of air flow propagation directed towards one zone of the baking chamber, whilst a second deflector device 30 is oriented along a direction of air flow propagation directed towards another and different zone of the baking chamber.

That way, as they move, the deflector devices 30 direct the air towards two zones of the baking chamber: towards one zone by the first operating device 30 and towards another zone by the second deflector device 30.

In addition, each deflector device 30 is cyclically movable between a respective initial position and a respective final position, which do not coincide, in such a way as to divert the air flow towards different zones of the baking chamber.

More specifically, in the preferred embodiment, the first deflector device 30 is oriented according to a first diverting angle to the direction of origin of the air flow coming out of the respective outlet mouth 26. The second deflector device 30 is oriented according to a second diverting angle to the direction of origin of the air flow coming out of the respective outlet mouth 26; where the second diverting angle is different from the first. In other words, the direction of propagation of the diverted air flow is different from the first device to the second device, so that for each instance of movement of the deflector devices 30, the air flow is diverted towards two zones of the oven which are at least partly different from each other.

More in detail, as may be observed in Figure 1, the baffle panel of the first deflector device 30 (the top one) is positioned at a first angle to the air flow coming out of the outlet mouth, whilst the baffle panel of the second deflector device 30 (the bottom one) is substantially parallel to the air flow coming out of the outlet mouth.

In other words, the deflector devices 30 are oriented according to respective directions of air flow propagation directed towards different zones of the baking chamber at least during the same instant in time as the deflector devices 30 move.

Further, the first air flow deflector device 30 is cyclically movable between its respective initial position, corresponding to a direction of propagation of the air flow towards a first zone of the baking chamber, and its respective final position, corresponding to a direction of propagation of the air flow towards a second zone of the baking chamber. Further, the second air flow deflector device 30 is cyclically movable between its respective initial position, corresponding to a direction of propagation of the air flow towards a third zone of the baking chamber which is at least partly different from the first zone, and its respective final position, corresponding to a fourth direction of propagation of the air flow which is at least partly different from the second zone.

In other words, each air flow deflector device 30 is movable along a respective, predetermined arc of movement. It should be noted that the movement of one air flow deflector device 30 is offset from the movement of the other air flow deflector device 30.

As already mentioned, the oven 1 comprises motion transmission means 43 for driving the baffle panels 31 and connected to each baffle panel 31 in such a way as to cause it to rotate automatically about its axis of extension. By "automatically" is meant that during the baking of the foods, each baffle panel 31 rotates without requiring manual action by any person.

More specifically, the movement means 41 are mounted mainly outside the baking chamber 6.

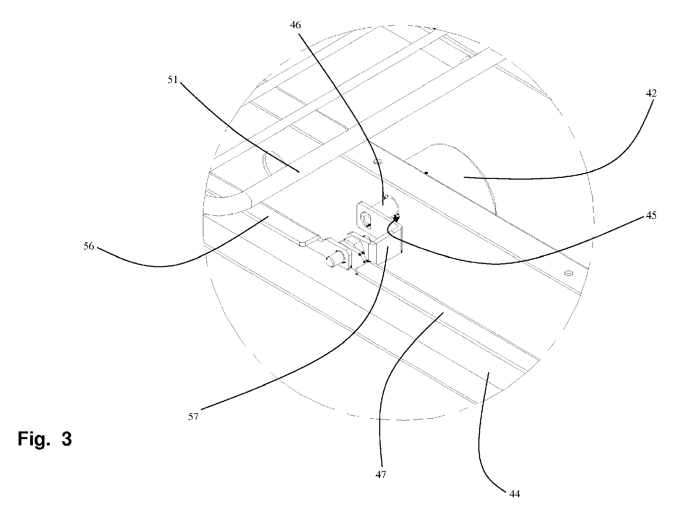

As shown in Figure 3, the motor 42 and the transmission system 43 are at least partly located under the bottom wall 8 of the containing structure 2.

Preferably, the motor 42 is fixed at a bar 44 connected to the supporting base of the containing structure 2. More specifically, the bar 44 extends mainly horizontally and has a supporting hole 45 at which the motor 42 is mounted. More precisely, the rotor 46 of the motor 42 is inserted through the hole 45 (Figure 3).

In addition, the transmission means 43 comprise a crank lever system which connects the motion generating unit 42 to the first deflector device 30, and a second crank lever system which connects the motion generating unit 42 to the second deflector device 30.

More in detail, the first crank lever system comprises a first link 47 and a first connecting rod 48, whilst the second crank lever system comprises a second link 49 and a second connecting rod 56. In practice, the first link 47 is connected between the motion generating unit 42 and the first connecting rod 48, whilst the first connecting rod 48 is connected to the first link 47 rotatably and to the deflector device 30. The second link 49 is connected between the motion generating unit 42 and the second connecting rod 56, whilst the second connecting rod 56 is connected to the second link 49 rotatably and to the deflector device 30. More specifically, each connecting rod 48, 56 is connected to the respective baffle panel 31 at the bottom pin 40 in order to make it rotate about the main axis of extension A.

The motion transmission means 43 also comprise a third crank lever system interposed between the motion generating unit 42 and the two links. More in detail, the third crank lever system comprises a third connecting rod 57 rotatably connected to the end of both links 47, 49 and connected to the motor.

Thus, rotation of the motor causes the third connecting rod 57 to rotate, thereby imparting translational motion to the two links 47, 49 which in turn cause the baffle panels 31 to rotate on themselves through the first connecting rod 48 and the second connecting rod 56.

Alternatively to the crank lever systems described above, the transmission means 43 might comprise a rack system extending at the deflector devices 30 for the driving thereof. More specifically, in this alternative embodiment, the unit 42 for generating the motion comprises a motor which meshes with the rack and which is configured to drive the latter in two opposite directions. Lastly, the oven 1 comprises a supporting rack 50 (of known type (also known in the jargon of the trade as oven rack or oven pan rack) for oven grids 51 and mounted inside the baking chamber 6 (Figure 2). Preferably, the rack 50 abuts against the side wall 7.

More specifically, the baffle panel 31 is located laterally of the rack 50. In the preferred embodiment, each baffle panel 31 is located between the rack 50 and a respective side wall.

The operation of the device may be inferred directly from the foregoing description. More specifically, the deflector device 30 comes into operation during baking of the foods.

That way, the hot air flow generated by the heating means 16 is emitted from the outlet mouths 26 and strikes the baffle panels 31. These baffle panels 31, by rotating on themselves about their respective main axes of extension A, divert the hot air flow along a plurality of different directions in such a way that the heat is distributed uniformly in the baking chamber 6. More specifically, each baffle panel 31 rotates cyclically from its initial position to its final position thanks to the movement generated by the movement means 41.

It should be noted that the baffle panels 31 are positionally constrained to each other by the links 47, 49 and the connecting rods 48, 56, 57.

Thus, by pre-positioning the baffle panels along a direction of air flow propagation directed towards different zones of the baking chamber, it is possible to divert the air flow towards two or more zones of the baking chamber during the full cyclic movement of the deflector devices 30.

The invention achieves the proposed aims.

More specifically, the invention allows the heat to be distributed uniformly in the baking chamber without overly complicating the structure of the oven.

In effect, the differently oriented baffle panels and their cyclic movement allows the heat to be directed to different zones of the baking chamber at each instant in time during movement of the baffle panels.

Further, the presence of a single motor allows savings in oven production costs and simplifies the drive system by which the baffle panels are moved. The presence of a single motor also allows creating a positional constraint between the baffle panels in such a way that they move without changing their positional correlation.

The convection oven according to this invention guarantees uniform heat distribution in the baking chamber also thanks to the continuous movement of the baffle panels while the food items are being baked.

It should also be noted that this invention is particularly easy to carry out and that even the cost connected with implementing the invention is relatively low.

## Claims

1. A convection oven (1) comprising:
a containing structure (2);
a baking chamber (6) made inside the containing structure (2);
heating means (16) operatively associated with the baking chamber (6) to generate a hot air flow inside the baking chamber (6); the heating means (16) being mounted on a side wall (7) of the containing structure and the air flow propagating away from it towards the baking chamber (6); the side wall (7) having two outlet mouths (26) giving onto the baking chamber (6) and through which the air flow is emitted;
two hot air flow deflector devices (30), each mounted at a respective outlet mouth (26) and designed to be struck by the hot air flow in order to divert it; each deflector device (30) being movable, during operation of the oven (1) in order to divert the hot air flow towards a plurality of different zones of the baking chamber (6);
**characterized in that** it comprises motion transmission means (43) connected between each deflector device (30) and a single motion generating unit (42) in such a way as to drive the deflector devices (30); the motion transmission means (43) defining a fixed and predetermined positional relationship between the two deflector devices (30) so that the latter move without changing their positions relative to each other; each deflector device (30) being cyclically movable between a respective initial position and a respective final position, which do not coincide, in such a way as to divert the air flow towards different zones of the baking chamber (6).

2. The convection oven (1) according to claim 1, **characterized in that** the deflector devices (30) are oriented according to respective directions of air flow propagation directed towards different zones of the baking chamber (6) at least during the same instant in time as the deflector devices (30) move.

3. The convection oven according to claim 2, **characterized in that** a first air flow deflector device (30) is cyclically movable between a respective initial position, corresponding to a direction of propagation of the air flow towards a first zone of the baking chamber (6), and a respective final position, corresponding to a direction of propagation of the air flow towards a second zone of the baking chamber (6); a second air flow deflector device (30) being also cyclically movable between a respective initial position, corresponding to a direction of propagation of the air flow towards a third zone of the baking chamber (6) which is at least partly different from the first zone, and a respective final position, corresponding to a fourth direction of propagation of the air flow which is at least partly different from the second zone.

4. The convection oven according to any of the preceding claims, **characterized in that** the motion transmission means (43) comprise a first crank lever system, which connects a first deflector device (30) to the motion generating unit (42), and a second crank lever system, which connects a second deflector device (30) to the motion generating unit (42).

5. The convection oven according to claim 4, **characterized in that** the first crank lever system comprises a first link (47) and a first connecting rod (48), whilst the second crank lever system comprises a second link (49) and a second connecting rod (56); the first link (47) being connected between the motion generating unit (42) and the first connecting rod (48), whilst the first connecting rod (48) is connected to the first link (47) rotatably and to the deflector device (30); the motion transmission means (43) comprising a third crank lever system interposed between the motion generating unit (42) and the two links (47), (49).

6. The convection oven according to claim 4 or 5, **characterized in that** each air flow deflector device (30) comprises a baffle panel (31) extending along a respective main direction of extension (A) from a respective bottom end (34) to a respective top end (35); the movement of the baffle panel (31) being defined by the rotation of the respective baffle panel (31) about the main axis of extension (A) so as to vary the angle of incidence of the air flow on the baffle panel (31) during use, thereby determining a variable direction of propagation during movement.

7. The convection oven according to claim 6, **characterized in that** each link is connected to the respective deflector device (30) at the bottom end of the baffle panel (31).

8. The convection oven according to any of the preceding claims, **characterized in that** the transmission means (43) are mounted outside the baking chamber (6).

9. The convection oven according to any of the preceding claims, **characterized in that** the motion transmission means (43) comprise an electric motor.

10. The oven according to any of the preceding claims, **characterized in that** the containing structure (2) comprises at least one side wall (7), a bottom wall (8) and an upper wall opposite to the bottom wall (8), which are connected to each other and together define the baking chamber (6); each deflector device (30) extending mainly along a respective main axis of extension (A) from the bottom wall (8) to the upper wall of the baking chamber (6) so that the baffle panel (31) interferes with the propagation of the air flow.

11. The convection oven (1) according to claim 10, **characterized in that** each deflector device (30) extends all the way from the bottom wall (8) to the upper wall in such a way as to cover the full height of the baking chamber (6).

12. The convection oven (1) according to any of the preceding claims, **characterized in that** each baffle panel (31) comprises at least one lateral portion (33) extending mainly longitudinally along the main axis of extension (A); the lateral portion (33) being inclined at an angle to the rest of the baffle panel (31) so as to give the air flow diverting surface (32) a desired shape.

13. The convection oven (1) according to any of the preceding claims, **characterized in that** each deflector device (30) comprises removable connecting means (36) operatively interposed between the bottom end (34) and the bottom wall (8) and between the top end (35) and the upper wall to allow the baffle panel (31) to be connected to or disconnected from the rest of the deflector device (30).

14. The convection oven (1) according to claim 13, **characterized in that** the removable connecting means (36) comprise at least one upper hole made on the upper wall and an upper pin (39) connected to the top end (35) of the baffle panel (31) and rotatably inserted in the upper hole; the removable connecting means (36) comprising a bottom plate (52) rotatably attached to the bottom wall (8) and removably connected to the bottom end (34) of the baffle panel (31).

15. The convection oven (1) according to any of the preceding claims, **characterized in that** it comprises a covering panel (24) which is interposed between the heating means (16) and the baking chamber (6) and which is provided with the outlet mouths (26); the covering panel (24) having at least one groove (55) located at a respective outlet mouth (26) in such a way as to define a space for mounting a respective deflector device (30).

## Amended claims

### Amended claims in accordance with Rule 137(2) EPC.

1. A convection oven (1) comprising:
a containing structure (2);
a baking chamber (6) made inside the containing structure (2);
heating means (16) operatively associated with the baking chamber (6) to generate a hot air flow inside the baking chamber (6); the heating means (16) being mounted on a side wall (7) of the containing structure and the air flow propagating away from it towards the baking chamber (6); the side wall (7) having two outlet mouths (26) giving onto the baking chamber (6) and through which the air flow is emitted;
a covering panel (24) interposed between the heating means (16) and the baking chamber (6) in such a way as to cover the heating means (16);
two hot air flow deflector devices (30), each mounted at a respective outlet mouth (26) and designed to be struck by the hot air flow in order to divert it; each deflector device (30) being movable, during operation of the oven (1) in order to divert the hot air flow towards a plurality of different zones of the baking chamber (6);
motion transmission means (43) connected between each deflector device (30) and a single motion generating unit (42) in such a way as to drive the deflector devices (30); the motion transmission means (43) defining a fixed and predetermined positional relationship between the two deflector devices (30) so that the latter move without changing their positions relative to each other; each deflector device (30) being cyclically movable between a respective initial position and a respective final position, which do not coincide, in such a way as to divert the air flow towards different zones of the baking chamber (6);
**characterized in that** each hot air flow deflector device (30) comprises at least one baffle panel (31) mounted in the baking chamber (6) and having an air flow diverting surface (32) which, in use, strikes the air flow in such a way that the hot air flow generated by the heating means (16) is emitted from the outlet mouths (26) and strikes the baffle panels (31); each baffle panel (31) being mounted in the proximity of the covering panel (24) and being spaced therefrom towards the baking chamber (6).

2. The convection oven (1) according to claim 1, **characterized in that** the deflector devices (30) are oriented according to respective directions of air flow propagation directed towards different zones of the baking chamber (6) at least during the same instant in time as the deflector devices (30) move in such a way that during each instant in time in which the deflector devices (30) move, a first deflector device (30) is oriented along a direction of air flow propagation directed towards one zone of the baking chamber, whilst a second deflector device (30) is oriented along a direction of air flow propagation directed towards another and different zone of the baking chamber.

3. The convection oven according to claim 2, **characterized in that** a first air flow deflector device (30) is cyclically movable between a respective initial position, corresponding to a direction of propagation of the air flow towards a first zone of the baking chamber (6), and a respective final position, corresponding to a direction of propagation of the air flow towards a second zone of the baking chamber (6); a second air flow deflector device (30) being also cyclically movable between a respective initial position, corresponding to a direction of propagation of the air flow towards a third zone of the baking chamber (6) which is at least partly different from the first zone, and a respective final position, corresponding to a fourth direction of propagation of the air flow which is at least partly different from the second zone.

4. The convection oven according to any of the preceding claims, **characterized in that** the motion transmission means (43) comprise a first crank lever system, which connects a first deflector device (30) to the motion generating unit (42), and a second crank lever system, which connects a second deflector device (30) to the motion generating unit (42).

5. The convection oven according to claim 4, **characterized in that** the first crank lever system comprises a first link (47) and a first connecting rod (48), whilst the second crank lever system comprises a second link (49) and a second connecting rod (56); the first link (47) being connected between the motion generating unit (42) and the first connecting rod (48), whilst the first connecting rod (48) is connected to the first link (47) rotatably and to the deflector device (30); the motion transmission means (43) comprising a third crank lever system interposed between the motion generating unit (42) and the two links (47), (49).

6. The convection oven according to claim 4 or 5, **characterized in that** each air flow deflector device (30) comprises a baffle panel (31) extending along a respective main direction of extension (A) from a respective bottom end (34) to a respective top end (35); the movement of the baffle panel (31) being defined by the rotation of the respective baffle panel (31) about the main axis of extension (A) so as to vary the angle of incidence of the air flow on the baffle panel (31) during use, thereby determining a variable direction of propagation during movement.

7. The convection oven according to claim 6, **characterized in that** each link is connected to the respective deflector device (30) at the bottom end of the baffle panel (31).

8. The convection oven according to any of the preceding claims, **characterized in that** the transmission means (43) are mounted outside the baking chamber (6).

9. The convection oven according to any of the preceding claims, **characterized in that** the motion transmission means (43) comprise an electric motor.

10. The oven according to any of the preceding claims, **characterized in that** the containing structure (2) comprises at least one side wall (7), a bottom wall (8) and an upper wall opposite to the bottom wall (8), which are connected to each other and together define the baking chamber (6); each deflector device (30) extending mainly along a respective main axis of extension (A) from the bottom wall (8) to the upper wall of the baking chamber (6) so that the baffle panel (31) interferes with the propagation of the air flow.

11. The convection oven (1) according to claim 10, **characterized in that** each deflector device (30) extends all the way from the bottom wall (8) to the upper wall in such a way as to cover the full height of the baking chamber (6).

12. The convection oven (1) according to any of the preceding claims, **characterized in that** each baffle panel (31) comprises at least one lateral portion (33) extending mainly longitudinally along the main axis of extension (A); the lateral portion (33) being inclined at an angle to the rest of the baffle panel (31) so as to give the air flow diverting surface (32) a desired shape.

13. The convection oven (1) according to any of the preceding claims, **characterized in that** each deflector device (30) comprises removable connecting means (36) operatively interposed between the bottom end (34) and the bottom wall (8) and between the top end (35) and the upper wall to allow the baffle panel (31) to be connected to or disconnected from the rest of the deflector device (30).

14. The convection oven (1) according to claim 13, **characterized in that** the removable connecting means (36) comprise at least one upper hole made on the upper wall and an upper pin (39) connected to the top end (35) of the baffle panel (31) and rotatably inserted in the upper hole; the removable connecting means (36) comprising a bottom plate (52) rotatably attached to the bottom wall (8) and removably connected to the bottom end (34) of the baffle panel (31).

15. The convection oven (1) according to any of the preceding claims, **characterized in that** it comprises a covering panel (24) which is interposed between the heating means (16) and the baking chamber (6) and which is provided with the outlet mouths (26); the covering panel (24) having at least one groove (55) located at a respective outlet mouth (26) in such a way as to define a space for mounting a respective deflector device (30).
